# EUROPÄISCHE PATENTANMELDUNG

(11) **EP 2 425 711 A2**
(43) Veröffentlichungstag der Anmeldung: **07.03.2012**
(21) Anmeldenummer: 11179385.7
(22) Anmeldetag: 30.08.2011
(51) Int. Cl.: A01K 13/00

(54) **Schutzgamasche zum Schutz von Pferdebeinen**

(30) Priorität: 03.09.2010 DE 102010044352
(71) Anmelder: E.A. Mattes GmbH, 78570 Mühlheim an der Donau (DE)
(72) Erfinder: Mattes, Peter, 78601 Mahlstetten (DE)
(74) Vertreter: Patentanwälte Westphal, Mussgnug & Partner

(57) **Zusammenfassung**

Schutzgamasche zum Schutz von Pferdebeinen mit folgenden Merkmalen:
- eine im Wesentlichen rechteckförmige Aufpolsterung (1),
- die Aufpolsterung (1) weist im am Bein des Pferdes befestigten Zustand zwei in Längsrichtung des Beines verlaufende Längskanten (1a, 1b) auf,
- einen Reißverschluss (2) mit zwei Reißverschlusshälften (2a, 2b), wobei jeweils einer der Reißverschlusshälften (2a, 2b) im Bereich einer der Längskanten (1a, 1b) der Aufpolsterung (1) angeordnet ist, und
- einen Überlappungsabschnitt (6, 6a, 6b), durch welchen bei am Bein befestigter Schutzgamasche der gesamte Reißverschluss abdeckbar ist.

## Beschreibung

Die Erfindung betrifft eine Schutzgamasche zum Schutz von Pferdebeinen mit einer Matte, welche Befestigungselemente zum lösbaren Befestigen der Schutzgamasche am Pferdebein aufweist.

Eine solche Schutzgamasche ist aus der DE 42 06 740 A1 bekannt, bei der Gummibänder als Befestigungselemente vorgesehen sind. An einer Seite der Gamasche weisen diese Gummielemente Verschlusselemente auf, die in entsprechende Verschlusselemente auf der gegenüberliegenden Seite der Gamasche eingehakt werden. Ferner sind diese Gummibänder mittels Druckknöpfen lösbar mit der Gamasche verbunden.

Bei der Verwendung solcher Gummielemente besteht die Gefahr, dass diese Gamaschen zu fest um das Pferdebein gelegt werden, wodurch der Tragekomfort für das Pferd eingeschränkt wird.

Ferner ist in der EP 0 727 140 A1 ein Sehnenschoner für Pferde als Gamasche oder Streifkappe beschrieben, die im Wesentlichen als eine um das Pferdebein mittels Klett- und Flauschbändern wickelbare Matte beschrieben, die eine außenseitig aufgesetzte, profilierte Schutzkappe aus steiferem flexiblem Material aufweist. Diese Schutzkappe ist mit weichelastischem Polstermaterial unterlegt, so dass damit die Gefahr eines Scheuerns der Gamasche am Pferdebein ausgeschlossen werden soll.

Auch diese bekannte Gamasche wird in nachteiliger Weise mit Klett- und Flauschbändern am Pferdebein befestigt, so dass ein eventuell zu enges Anlegen dieser Gamasche um das Pferdebein nicht bemerkt wird. Ferner weist diese Gamasche einen komplizierten Aufbau auf, so dass deren Herstellung mit hohen Kosten verbunden ist.

Seit kurzem werden von der Firma Julius Zorn GmbH, Aichach, flachgestrickte Kompressionsbandagen für Pferde vertrieben. Die Kompressionsbandagen bestehen aus einem großmaschigen und luftdurchlässigen Material, das 74% Polyamid, 17% Elasthan und 9% Viskose aufweist. Diese Kompressionsbandagen weisen ein im Wesentlichen rechteckförmiges einlagiges Gewirk aus dem beschriebenen Material auf. Die Längsseiten sind mit zueinander beabstandeten Haken versehen, die beim Anlegen der Bandage an dem Pferdefuß an gegenüberliegenden Ösen der Matte eingehängt werden müssen. Die Ösen und Haken sind von einem innenliegenden Stoffband abgedeckt, damit die Ösen und Haken nicht auf den Pferdefuß drücken können. Zusätzlich ist ein außenliegender Reißverschluss vorgesehen, der, nachdem die Haken in die Ösen eingehakt sind, zu schließen ist. Zur Sicherung des geschlossenen Reißverschlusses ist noch eine Lasche vorgesehen, die im oberen Bereich der am Pferdefuß angelegten Kompressionsbandage quer über den oberen Bereich mittels Klettverschluss befestigt wird. Die Kompressionsbandage ist dabei so gefertigt, dass der längs verlaufende Reißverschluss vorne am Pferdefuß verläuft.

Aufgrund des verwendeten Materials ist die Kompressionsbandage als Schlag- oder Streifschutz für einen Pferdefuß ungeeignet.

Der Erfindung liegt daher die Aufgabe zugrunde, eine Schutzgamasche der eingangs genannten Art anzugeben, mit der die oben genannten Nachteile vermieden werden, insbesondere einen einfache Aufbau aufweist und damit kostengünstig herstellbar sind sowie einen hohen Tragekomfort für das Pferd sicherstellt. Die Schutzgamasche soll einen wirksamen und leicht am Pferdefuß anzuziehenden Schlag- und Streifschutz bilden.

Diese Aufgabe wird gelöst durch eine Schutzgamasche mit den Merkmalen des Patentanspruchs 1.

Die erfindungsgemäße Gamasche zeichnet sich im Wesentlichen durch folgende Merkmale aus:
- eine im Wesentlichen rechteckförmige Aufpolsterung (1),
- die Aufpolsterung (1) weist im am Bein des Pferdes befestigten Zustand zwei in Längsrichtung des Beines verlaufende Längskanten (1a, 1b) auf,
- einen Reißverschluss (2) mit zwei Reißverschlusshälften (2a, 2b), wobei jeweils einer der Reißverschlusshälften (2a, 2b) im Bereich einer der Längskanten (1a, 1b) der Aufpolsterung (1) angeordnet ist, und
- einen Überlappungsabschnitt (6, 6a, 6b), durch welchen bei am Bein befestigter Schutzgamasche der gesamte Reißverschluss abdeckbar ist.

Durch die vorgegebene Anordnung des Reißverschlusses und dessen Überdeckung in angelegtem Zustand der Schutzgamasche werden diese über deren gesamten Länge formschlüssig verbunden, so dass es nicht mehr möglich ist, eine solche Schutzgamasche mit zu engem Sitz an das Pferdebein anzulegen. Außerdem weist diese erfindungsgemäße Schutzgamasche einen einfachen Aufbau auf, der eine kostengünstige Herstellung ermöglicht.

Gemäß einer Weiterbildung der Erfindung verlaufen die Reißverschlusshälften des Reißverschlusses jeweils parallel zu einer Längskante der Matte, die ein sehr einfaches Anlegen der Schutzgamasche am Pferdebein ermöglicht. Da der Reißverschluss nach dem Anlegen der Schutzgamasche vom Überlappungsabschnitt, der bevorzugt einstückig an der Aufpolsterung angebracht ist, ganzflächig überdeckt wird, kann sich der Reißverschluß nicht mehr unbeabsichtigt öffnen. Zudem ist die Schutzgamasche ohne erkennbaren Reißverschluss schöner anzusehen.

Das Material der Aufpolsterung ist ein luftdurchlässiges Textil, z. B. ein Vlies oder ein Stoffmaterial. Vorzugsweise ist die Aufpolsterung aus zwei, drei, vier oder mehr Lagen gebildet, um einen wirksamen Stoß- und/oder Streifschutz für das Pferdebein zu bieten.

Die Schutzgamasche ist so gestaltet, dass der Reißverschluss beim Anlegen an das Pferdebein an dem zur Außenseite gewandten Teil des Pferdebeines zu liegen kommt. Ein in dem Mittenbereich der Aufpolsterung vorteilhafterweise angebrachter Verstärkungsbereich (z. B. eine noch dickere Aufpolsterung oder eine Schutzkappe aus Hartmaterial, also z. B. eine Kunststoffoder Lederkappe) liegt dem Reißverschluss gegenüber und damit an der Innenseite des Pferdebeines.

In einer Weiterbildung der Erfindung ist der Reißverschluss über einen zwischenliegenden Dehnstreifen an die Aufpolsterung angenäht. Es kann der Dehnstreifen aus elastischem Material auch in die Aufpolsterung eingearbeitet sein. Zweck ist es, dass sich die Schutzgamasche um etwa 1 bis 3 cm dehnen lässt, damit diese an verschieden dicke Pferdebeine angebracht werden kann.

Die Verwendung eines Reißverschlusses sichert einen optimalen Halt der Schutzgamasche an dem Pferdebein. Zudem ist es fertigungstechnisch einfach möglich, einen solchen Reißverschluss auf der Aufpolsterung anzubringen, insbesondere auch vollautomatisch durch Nähmaschinen.

In einer Ausgestaltung der Erfindung ist sowohl ein Reißverschluss als auch ein Klettverschluss vorgesehen, wobei
- zur Bildung der Überlappung eine erste auf der Aufpolsterung angeordnete Reißverschlusshälfte parallel abgesetzt zur einen Längskante der Aufpolsterung verläuft,
- an dieser einen Längskante der erste Teil des Klettverschlusses randbündig angeordnet ist, und
- der zweite Teil des Klettverschlusses im Bereich der anderen Längskante auf der längskantenabgewandten Seite der zweiten Reißverschlusshälfte derart auf der Aufpolsterung angeordnet ist, dass im am Pferdebein befestigten Zustand der Aufpolsterung die Überlappung unter Abdeckung des geschlossenen Reißverschlusses fixiert wird.

Vorzugsweise ist dabei die zweite Reißverschlusshälfte unter Ausbildung eines schmalen Randes parallel abgesetzt zur anderen Längskante der Aufpolsterung angeordnet, wobei insbesondere die Breite dieses Randes kleiner als die Breite der Überlappung ist.

Mit einer solchen erfindungsgemäßen Schutzgamasche wird ein äußerst hoher Tragekomfort erzielt, da durch die erfindungsgemäße Anordnung der Befestigungselemente im Bereich der Längskanten eine ausreichende Polsterung gegen ein möglicherweise Eindrücken oder Durchdrücken der Befestigungselemente auf das Pferdebein im Wesentlichen ausgeschlossen ist. Zudem ist dank der weichen stoßabfangenden Aufpolsterung ein wirksamer Stoßund Streifschutz für das Pferdebein sichergestellt. Gleichzeitig ist durch die Verwendung des Reißverschlusses über die gesamte Länge der Schutzgamasche in Längsrichtung des Pferdebeins ein gegen Verrutschen sicherer und bequemen Halt gewährleistet. Durch die Fixierung der Überlappung mit einem Klettverschluss über dessen gesamten Länge in Längsrichtung des Pferdebeins ist auch gleichzeitig ein ungewolltes Lösen der Gamasche vom Pferdebein nahezu ausgeschlossen.

In einer weiteren Ausgestaltung der Erfindung wird die Aufpolsterung im mittleren Bereich mit einem in Längsrichtung des Pferdebeins verlaufenden verdickten Polstermaterial derart verstärkt, dass im am Pferdebein befestigten Zustand der Aufpolsterung dieses Polstermaterial den nach innen gewandten Teil des Pferdebeines schützt. Somit wird ein zusätzlicher Schutz des nach innen gewandten Bereichs des Pferdebeins gegen physische Einwirkung erzielt.

Vorzugsweise ist dieser Verstärkungsbereich mit einem verdickten Polstermaterial in der Aufpolsterung ausgebildet. Der Verstärkungsbereich kann eine löffelartige Form aufweisen. Es kann auch eine Schutzkappe aus Leder, Hartkunststoff oder dergleichen in den Verstärkungsbereich eingesetzt oder aufgesetzt sein.

Die Erfindung wird nachfolgend anhand von Ausführungsbeispielen unter Bezugnahme auf die beigefügten Figuren ausführlich beschrieben. Es zeigen:
- Figur 1: eine schematische Darstellung der Innenseite einer erfindungsgemäßen Schutzgamasche,
- Figur 2: eine schematische Darstellung der Außenseite der erfindungsgemäßen Schutzgamasche nach Figur 1,
- Figur 3: eine ähnliche Schutzgamasche wie in Figur 1, bei der der Reißverschluss mit einem Dehnstreifen an die Aufpolsterung genäht ist, und

- Figur 4: eine ähnliche Schutzgamasche wie in Figur 1, bei der in die Aufpolsterung ein Dehnstreifen eingearbeitet ist.

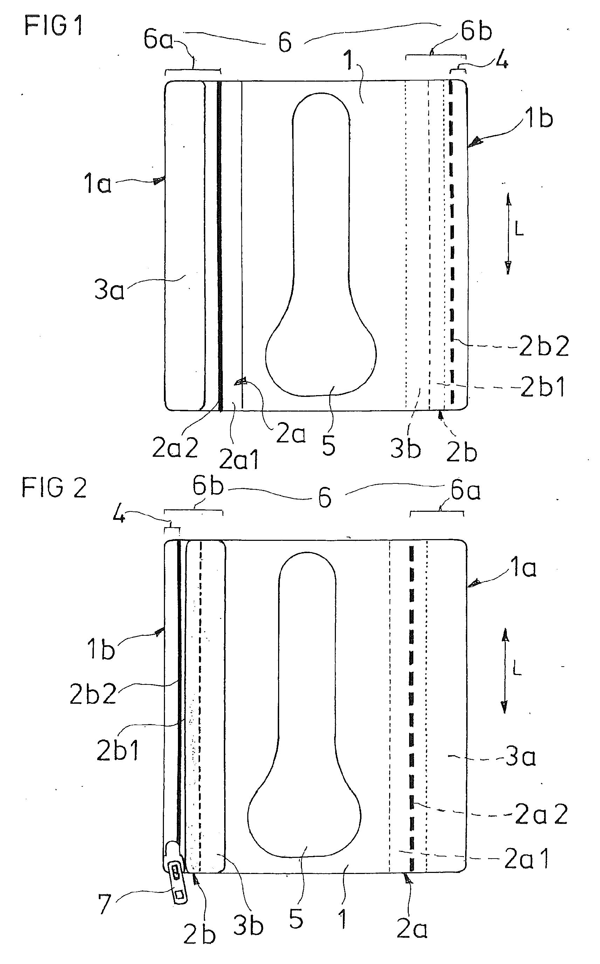

Die Schutzgamasche nach Figur 1 und Figur 2 umfasst eine im Wesentlichen rechteckförmige Matte 1, die im Folgenden als Aufpolsterung 1 bezeichnet wird, die zwei gegenüberliegende Längskanten 1a und 1b aufweist. Figur 1 zeigt die Innenseite dieser Aufpolsterung 1, die an ein Pferdebein gelegt wird, Figur 2 zeigt die Außenseite der Aufpolsterung 1, die im am Pferdebein befestigten Zustand auch sichtbar ist.

Mit dieser Aufpolsterung 1 wird ein Bein des Pferdes derart umschlossen, dass die beiden Längskanten 1a und 1b in Längsrichtung L des Pferdebeins verlaufen und einen im nach außen vom Pferdekörper weggerichteten Bereich des Pferdebeins ebenfalls in Längsrichtung L des Pferdebeins verlaufenden Überlappungsbereich 6 bilden, wie weiter unten genauer erläutert wird.

Im mittleren Bereich dieser Aufpolsterung 1 erstreckt sich ebenfalls in Längsrichtung L ein löffelartig ausgebildete Verstärkungsbereich 5, der hier als verdicktes Polstermaterial ausgebildet ist, das im das Pferdebein umschließenden Zustand im zur Pferdemitte zeigenden Bereich des Pferdebeins verläuft. Läuft das Pferd, so sind die sich aneinander vorbeibewegenden Beine wirksam vor Schlägen und Streifen der Beine geschützt.

Die Aufpolsterung 1 der Schutzgamasche weist einen Reißverschluss 2 auf, bestehend aus zwei Reißverschlusshälften 2a und 2b mit jeweils einem Reißverschlussband 2a1 bzw. 2b1 und daran verlaufenden Reißverschlusszähnen 2a2 bzw. 2b2 und zum anderen ein Klettverschluss 3, bestehend aus einem ersten Teil 3a und einem zweiten Teil 3b.

Gemäß Figur 1 ist das Reißverschlussband 2a1 der Reißverschlusshälfte 2a auf der Innenseite der Aufpolsterung 1 parallel abgesetzt zur Längskante 1a verlaufend angeordnet, so dass ein Randbereich 6a entsteht, dessen Breite dem Abstand der Reihe der Reißverschlusszähne 2a2 von der Längskante 1a entspricht und ein Überlappungsbereich 6 mit der gegenüberliegenden Längskante 1b bildet, wenn die Aufpolsterung 1 um das Pferdebein gelegt wird.

An der Längskante 1a verläuft in Längsrichtung L randbündig der erste Teil 3a des Klettverschlusses, wobei dieser Teil als Textilstreifen mit Zähnen, also als Hakenband ausgebildet ist.

Auf der Außenseite (siehe Figur 2) ist an der gegenüberliegenden Längskante 1b sowohl der andere Teil 2b des Reißverschlusses als Reißverschlussband 2b1 mit den daran befestigten Reißverschlusszähnen 2b2 und einem Schieber 7 als auch das zweite Teil 3b als Flauschband des Klettverschlusses angeordnet.

Dabei verläuft das Reißverschlussband 2b1 ebenfalls parallel abgesetzt zur Längskante 1b, so dass deren Reihe von Reißverschlusszähnen 2b2 einen Abstand 4 zur Längskante 1b bilden. Direkt an diese Reihe von Reißverschlusszähnen 2b2 schließt sich parallel der zweite Teil 3b des Klettverschlusses an und liegt dabei auf der längskantenabgewandten Seite der Reihe der Reißverschlusszähne 2b2. Fertigungstechnisch wird dabei sowohl das Reißverschlussband 2b1 als auch dieser zweite Teil 3b (Flauschband) gleichzeitig mit der Aufpolsterung 1 verbunden, bspw. durch Nähen.

Die hinsichtlich der Reihe der Reißverschlusszähne 2b2 gegenüberliegende Kante des zweiten Teils 3b des Klettverschlusses 3 bildet einen Randbereich 6b an der Längskante 1b, der zusammen mit dem Randbereich 6a an der Längskante 1a die Überlappung 6 bildet.

Die Aufpolsterung 1 kann bspw. aus einem Vlies- oder StoffMaterial oder einem Polyestergewebe hergestellt werden, wobei die Kanten einer solchen Matte , insbesondere die Längskanten 1a und 1b, eingefasst sind.

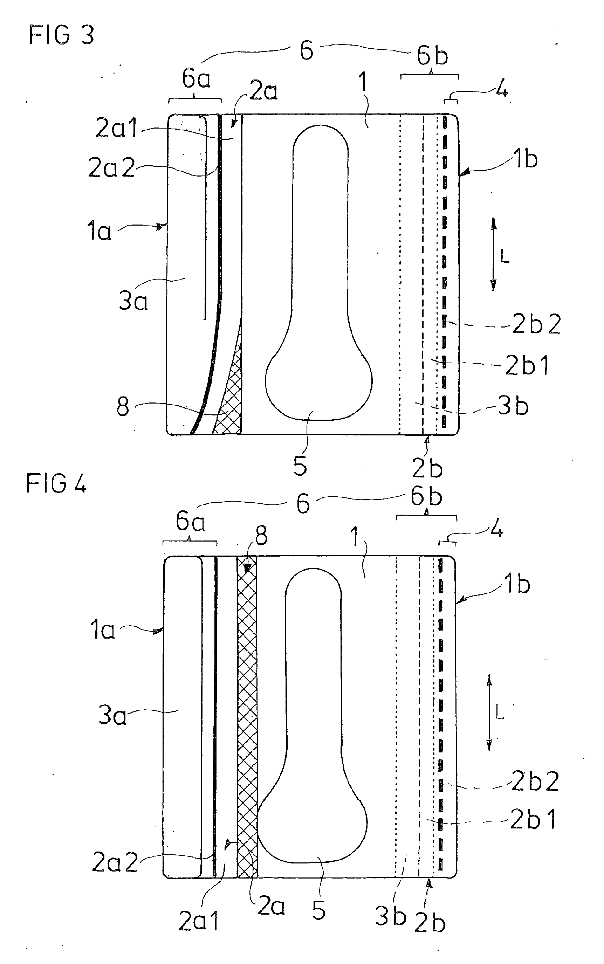

In Figur 3 und Figur 4 ist eine ähnliche Schutzgamasche wie in Figur 1 dargestellt. Zusätzlich weisen die Schutzgamaschen jetzt einen Dehnstreifen 8 auf, der in Figur 3 zwischen das Reißverschlussband 2a1 und die Aufpolsterung 1 entlang etwa 1/3 der Längskante 1a verläuft. In Figur 4 ist der Dehnstreifen 8 über die gesamte Länge der Schutzgamasche in die Aufpolsterung 1 eingearbeitet. Durch den Dehnstreifen ist es möglich, die Schutzgamasche etwas zu dehnen, z. B. um etwa 1 bis 3 cm, damit diese an unterschiedlich dicke Pferdebeine angelegt werden kann.

### Bezugszeichenliste

- 1: Aufpolsterung
- 1a: Längskante der Matte
- 1b: Längskante der Matte
- 2: Reißverschluss
- 2a: Reißverschlusshälfte
- 2a1: Reißverschlussband der Reißverschlusshälfte 2a
- 2a2: Reißverschlusszähne am Reißverschlussband 2a1
- 2b: Reißverschlusshälfte
- 2b1: Reißverschlussband der Reißverschlusshälfte 2b
- 2b2: Reißverschlusszähne am Reißverschlussband 2b1
- 3: Klettverschluss
- 3a: erster Teil des Klettverschlusses
- 3b: zweiter Teil des Klettverschlusses
- 4: Rand an Längskante 1b
- 5: Verstärkungsbereich
- 6: Überlappungsabschnitt
- 6a: Randbereich an Längskante 1a
- 6b: Randbereich an Längskante 1b
- 7: Schieber des Reißverschlusses 2a, 2b
- 8: Dehnstreifen

## Patentansprüche

1. Schutzgamasche zum Schutz von Pferdebeinen mit folgenden Merkmalen:
- eine im Wesentlichen rechteckförmige Aufpolsterung (1),
- die Aufpolsterung (1) weist im am Bein des Pferdes befestigten Zustand zwei in Längsrichtung des Beines verlaufende Längskanten (1a, 1b) auf,
- einen Reißverschluss (2) mit zwei Reißverschlusshälften (2a, 2b), wobei jeweils einer der Reißverschlusshälften (2a, 2b) im Bereich einer der Längskanten (1a, 1b) der Aufpolsterung (1) angeordnet ist, und
- einen Überlappungsabschnitt (6, 6a, 6b), durch welchen bei am Bein befestigter Schutzgamasche der gesamte Reißverschluss abdeckbar ist.

2. Schutzgamasche nach Anspruch 1,
**dadurch gekennzeichnet, dass** der Überlappungsabschnitt (6, 6a, 6b) aus dem gleichen Material wie die Aufpolsterung (1) besteht.

3. Schutzgamasche nach Anspruch 1 oder 2,
**dadurch gekennzeichnet, dass** der Überlappungsabschnitt (6, 6a, 6b) einen Klettverschluss aufweist mit einem ersten und zweiten Teil (3a, 3b), von denen jeweils ein Teil (3a, 3b) parallel zu einem der Reißverschlussteile (2a, 2b) verläuft.

4. Schutzgamasche nach einem der Ansprüche 1 bis 3,
**dadurch gekennzeichnet, dass**
- zur Bildung des Überlappungsabschnittes (6, 6a, 6b) eine erste auf der Aufpolsterung (1) angeordnete Reißverschlusshälfte (2a) parallel abgesetzt zur einen Längskante (1a) der Aufpolsterung (1) verläuft,
- an dieser einen Längskante (1a) der erste Teil (3a) des Klettverschlusses (3a, 3b) randbündig angeordnet ist, und
- der zweite Teil (3b) des Klettverschlusses (3a, 3b) im Bereich der anderen Längskante (1b) auf der längskantenabgewandten Seite der zweiten Reißverschlusshälfte (2b) derart auf der Aufpolsterung (1) angeordnet ist, dass im am Pferdebein befestigten Zustand der Aufpolsterung (1) des Überlappungsbereichs (6, 6a, 6b) unter Abdeckung des geschlossenen Reißverschlusses (2a, 2b) fixiert wird.

5. Schutzgamasche nach einem der Ansprüche 1 bis 4
**dadurch gekennzeichnet, dass** die zweite Reißverschlusshälfte (2b) unter Ausbildung eines schmalen Randes (4) parallel abgesetzt zur anderen Längskante (1b) der Aufpolsterung (1) verläuft.

6. Schutzgamasche nach Anspruch 5,
**dadurch gekennzeichnet, dass** die Breite des Randes (4) an der anderen Längskante (1b) kleiner ist als die Breite des Überlappungsbereichs (6, 6a, 6b).

7. Schutzgamasche nach einem der vorhergehenden Ansprüche,
**dadurch gekennzeichnet, dass** die Aufpolsterung (1) im mittleren Bereich mit einem Verstärkungsbereich (5) versehen ist.

8. Schutzgamasche nach Anspruch 7,
**dadurch gekennzeichnet, dass** der Verstärkungsbereich (5) in der Aufpolsterung (1) eine löffelartige Form aufweist.

9. Schutzgamasche nach einem der Ansprüche 1 bis 8,
**dadurch gekennzeichnet, dass** die Aufpolsterung (1) aus einem luftdurchlässigen vorzugsweise zwei-, drei-, vier- oder mehrlagigen Textilmaterial besteht.

10. Schutzgamasche nach Anspruch 9,
**dadurch gekennzeichnet, dass** das Textilmaterial ein Vlies oder Wollstoff oder eine Mischung aus diesen Materialien ist.

11. Schutzgamasche nach einem der Ansprüche 1 bis 10,
**dadurch gekennzeichnet, dass** ein Dehnstreifen vorgesehen ist, durch welchen sich die Schutzgamasche quer zu ihren Längskanten (1a, 1b) zumindest abschnittsweise dehnen lässt.

12. Schutzgamasche nach Anspruch 11,
**dadurch gekennzeichnet, dass** der Dehnstreifen zwischen einen der Reißverschlussteile (2a, 2b) und die Aufpolsterung vorgesehen ist.

13. Schutzgamasche nach einem der Ansprüche 1 bis 12,
**dadurch gekennzeichnet, dass** die gesamte Aufpolsterung (1) samt Überlappungsabschnitt (6, 6a, 6b) ein oberes, einstückiges Flächenteil und ein unteres, einstückiges Flächenteil aufweist, auf welche jeweils eines der Reißverschlusshälften (2a, 2b) und eines der Klettverschlusshälften (3a, 3b) aufgenäht ist.
